# NEUE EUROPÄISCHE PATENTSCHRIFT

(11) **EP 0 542 172 B2**
(45) Veröffentlichungstag und Bekanntmachung des Hinweises auf die Entscheidung über den Einspruch: **07.05.2003**
(45) Hinweis auf die Patenterteilung: 02.08.1995
(21) Anmeldenummer: 92119152.4
(22) Anmeldetag: 09.11.1992
(51) Int. Cl.: B61C 9/38, F16H 57/02

(54) **Antriebseinheit für Schienentriebfahrzeuge**
Power unit for railway traction units
Unité motorisée pour engins de traction ferroviaires

(30) Priorität: 13.11.1991 DE 4137264
(43) Veröffentlichungstag der Anmeldung: 19.05.1993
(73) Patentinhaber: ABB PATENT GmbH, 68309 Mannheim (DE)
(72) Erfinder: Schwendt, Lutz, W-3502 Vellmar (DE)
(74) Vertreter: Akers, Noel James

(56) Entgegenhaltungen:
- FR-A- 370 028
- FR-E- 30 489

## Beschreibung

Die Erfindung betrifft eine Antriebseinheit für Schienentriebfahrzeuge mit einem elektrischen Antriebsmotor und mit einem von diesem beaufschlagten Getriebe, das mit einem Radsatz verbunden ist.

Für den Antrieb von Schienentriebfahrzeugen ist es bekannt, Elektromotoren einzusetzen, die über ein Getriebe einen Radsatz mit ihrem Antriebsmoment beaufschlagen. Im allgemeinen sind die angetriebenen Radsätze in Drehgestellen angeordnet, die nur ein beschränktes Raumangebot zur Aufnahme der Antriebseinheiten aufweisen.

Die herkömmliche Getriebegehäusegestaltung weist ein Gehäuseoberteil und ein Gehäuseunterteil auf, deren gemeinsame Trennfuge den Lagersitz für die Getriebehauptwelle durchläuft. Aus bestimmten Gründen hat die Trennfuge im Lagersitz einen abknickenden Verlauf, was die Abdichtung erschwert. Es ist die Verwendung flüssiger Dichtmittel erforderlich, was hohe Arbeitsaufwendungen vor allem bei späterer Demontage und Wiedermontage bedeutet Sowohl die Dichtmittel als auch die erfoderlichen Reinigungsmittel sind häufig gesundheitsschädlich und erfordern besondere Schutzmaßnahmen oder Zulassungsverfahren.

Wegen des beschränkten Raumangebotes sind die Antriebseinheiten sehr kompakt ausgebildet, wobei der zur Verfügung stehende Raum sowohl nach Breite als auch nach Höhe weitestmöglich genutzt wird. Hierbei befindet sich der Gehäuseteil, der das Getriebe aufnimmt in einer vergleichsweise tiefen Lage in Bezug auf den Abstand zur Schienenspur. Aufgrund dieser exponierten Lage kommt es häufiger zu Beschädigungen des Getriebegehäuses, wobei aufgrund der herkömmlichen Getriebegehäusekonstruktion das Gehäuseunterteil des Getriebegehäuses komplett ausgewechselt werden muß.

Die mit dem Austausch beschädigter Getriebegehäuse-Unterteile verbundenen Arbeiten sind zeitund kostenintensiv, da ein aufwendiges Öffnen der Getriebelagerung erforderlich wird und die zum Austausch vorgesehenen Ersatzteile teure Präzisionsteile sind.

Ausgehend von diesem Stand der Technik ist es daher Aufgabe der Erfindung eine Antriebseinheit der eingangs genannten Art zu schaffen, deren Anfälligkeit für Beschädigungen vermindert ist und im Falle von Beschädigungen des Getriebegehäuses erforderliche Reparaturen schnell und kostengünstig durchführbar sind.

Diese Aufgabe wird entsprechend den kennzeichnenden Merkmalen des Patentanspruchs 1 gelöst.

Durch die Erfindung wird die abgeknickte Trennfuge vermieden, so daß die Verwendung flüssiger Dichtmittel mit all ihren Nachteilen entfällt.

Die Erfindung erlaubt weiterhin, daß das aufgrund einer aufgetretenen Beschädigung ursprünglich en bloc auszuwechselnde Gehäuseunterteil an seinem Einbauort belassen werden kann, da lediglich ein an der exponierten Unterseite des Getriebegehäuses plazierter abnehmbarer Bodendeckel ausgetauscht werden muß. Hierzu ist lediglich erforderlich, einige Befestigungsschrauben zu lösen und wieder einzuschrauben, wobei aufwendige Einpassung- und Abdichtungsarbeiten, die bisher erforderlich waren, vermieden werden.

In vorteilhafter Ausgestaltung der Erfindung ist vorgesehen, daß der Bodendeckel als Blechpressteil ausgebildet ist. Im Hinblick auf die im bodennahen Bereich auftretenden Schlag- und Stoßeinflüsse, die zur Beschädigung führen können, ist es vorteilhaft, den Bodendeckel aus Stahlblech, Stahlguß oder Sphäroguß zu fertigen. Statt dessen kann aber auch zweckmäßig sein, um Gewicht zu sparen, den Bodendeckel als Pressteil, Gußteil oder Schmiedeteil aus einer Leichtmetallegierung herzustellen.

In zweckmäßiger Weiterbildung der Erfindung kann auch eine Kombination des abnehmbaren Bodendeckels mit einer Schutzabdeckung für die Unterseite des Getriebegehäuses vorgesehen sein.

Diese und weitere vorteilhafte Ausgestaltungen der Erfindung sind Gegenstand der Unteransprüche. Anhand eines in der Zeichnung dargestellten Ausführungsbeispieles der Erfindung sollen die Erfindung, vorteilhafte Ausgestaltungen und Verbesserungen der Erfindung näher gezeigt und erläutert werden.

Es zeigen:
- Fig. 1: eine schematische Darstellung der Seitenansicht einer aus Antriebsmotor und Getriebe gebildeten Antriebseinheit mit einem Bodendeckel,
- Fig. 2: eine schematisch dargestellte Seitenansicht einer aus Antriebsmotor und Getriebe gebildeten Antriebseinheit mit einer Schutzabdeckung.

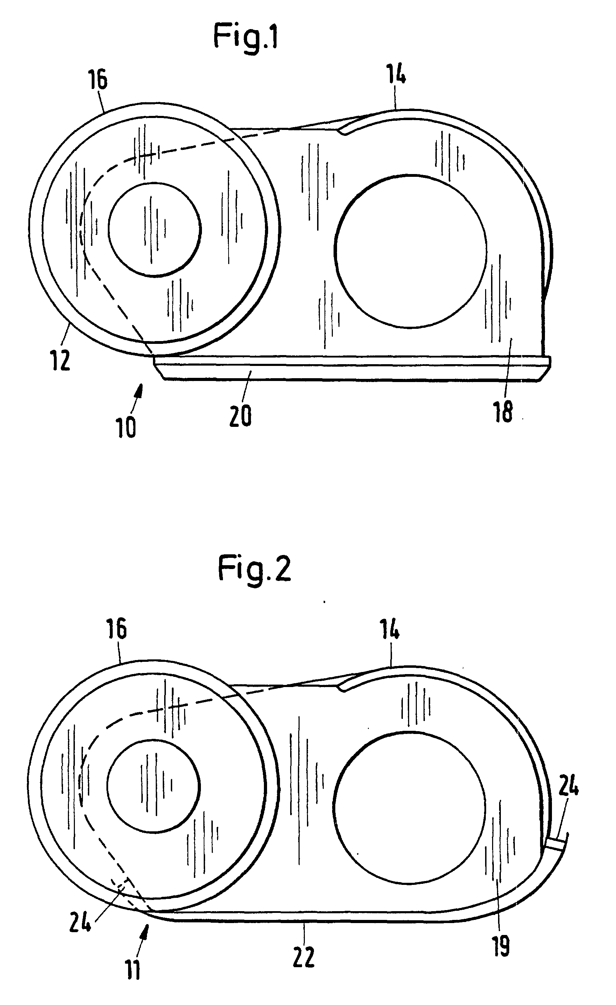

In Fig. 1 ist eine Antriebseinheit 10 dargestellt, die von einem Antriebsmotor 12 und einem hiermit verbundenen Getriebe 14 gebildet ist.

Der Antriebsmotor 12 befindet sich in einem Gehäuse 16 und das Getriebe 14 in einem separaten Gehäuse 18.

Die Unterseite der Antriebseinheit 10 wird im wesentlichen vom Getriebegehäuse 18 gebildet, welches hier einen Bodendeckel 20 aufweist.

Der Bodendeckel 20 erstreckt sich über die gesamte nach unten weisende Querschnittsfläche des Getriebegehäuses 18 und ist unter Zwischenfügung einer nicht näher gezeigten Dichtung an das Gehäuse 18 angeschraubt.

Je nach Erfordernis kann der Bodendeckel 20 plangearbeitet oder wannenförmig gewölbt sein.

In Fig. 2 ist eine Antriebseinheit 11 dargestellt, die weitestgehend den gleichen Aufbau wie die Antriebseinheit 10 gemäß Fig. 1 aufweist. Demgemäß gelten hierfür die gleichen Bezugsziffern die entsprechend bei der Beschreibung der Fig. 1 gegebenen Erläuterungen.

Das Getriebegehäuse 19 besitzt jedoch eine Schutzabdeckung 22, die sich über die gesamte Bodenfläche des Getriebegehäuses 19 erstreckt und mittels Befestigungsmitteln 24 im Abstand zum Getriebegehäuse an diesem befestigt ist.

Diese Schutzabdeckung, die die Bodenfreiheit des Getriebegehäuses nur geringfügig verringert ist vorzugsweise aus Federstahlblech hergestellt und dient als mechanischer Schutz der Unterseite des Getriebegehäuses, in dem es auftretende Stöße und Schläge aufnimmt und aufgrund seiner Federungscharakteristik durch elastische Verformung abbaut. Selbst bei stärkster Beanspruchung ist so eine Beschädigung des Getriebegehäuseunterteils vermieden, da die Schutzabdeckung 22 in einem solchen Falle sich an das Getriebegehäuse 19 anlegt und die an der Schutzabdeckung punktuell auftretende Beanspruchung flächenmäßig in das Getriebegehäuse 19 einleitet.

## Patentansprüche

1. Antriebseinheit (10) für Schienentriebfahrzeuge mit einem elektrischen Antriebsmotor (12) und mit einem von diesem beaufschlagten Getriebe (14), das mit einem Radsatz verbunden ist, **dadurch gekennzeichnet, daß** das Getriebegehäuse (18, 19) nicht durch die Getriebelagerung geteilt ist und mit einem Bodendeckel (20) versehen ist, der sich über die gesamte nach unten weisende Querschnittsfläche des Getriebegehäuses (18) erstreckt, welcher Bodendeckel (20) das Gehäuse (19) gegen mechanische Beschädigungen schützt.

2. Antriebseinheit nach Anspruch 1, **dadurch gekennzeichnet, daß** der Bodendeckel (20) als Blechpressteil ausgebildet ist und am Gehäuse (18, 19) angeschraubt ist.

3. Antriebseinheit nach Anspruch 1 oder 2, **dadurch gekennzeichnet, daß** der Bodendeckel (20) aus Stahlblech geformt ist.

4. Antriebseinheit nach Anspruch 1 oder 2, **dadurch gekennzeichnet, daß** der Bodendeckel (20) als Pressteil aus einer Leichtmetallegierung geformt ist.

5. Antriebseinheit nach Anspruch 1, **dadurch gekennzeichnet, daß** der Bodendeckel (20) aus Gußwerkstoff, zum Beispiel Stahlguß, Leichtmetallguß oder Sphäroguß, gefertigt ist und am Gehäuse (18, 19) angeschraubt ist.

6. Antriebseinheit nach Anspruch 1, **dadurch gekennzeichnet, daß** der Bodendeckel (20) als Schmiedeteil ausgeführt ist und am Gehäuse (18, 19) angeschraubt ist.

7. Antriebseinheit nach einem der vorherigen Ansprüche, **dadurch gekennzeichnet, daß** der bodennahe Bereich des Getriebegehäuses (19) mit einer Schutzabdeckung (22) versehen ist, welche das Gehäuse (19) gegen mechanische Beschädigung von unten schützt.

8. Antriebseinheit nach Anspruch 7, **dadurch gekennzeichnet, daß** die Schutzabdeckung (22) aus Federstahlblech gebildet ist und im Abstand zum Gehäuse (19) an diesem befestigt ist.

## Claims

1. Drive unit (10) for rail track units having an electric drive motor (12) and having a transmission (14) which the latter can act on and which is connected to a wheel set, **characterized in that** the transmission housing (18, 19) is not divided by the transmission bearings and is provided with a base cover (20) which extends over the entire downwardly pointing cross-sectional area of the transmission housing (18), which base cover (20) protects the housing (19) against mechanical damage.

2. Drive unit according to Claim 1, **characterized in that** the base cover (20) is embodied as a pressed sheet-metal part and is bolted onto the housing (18, 19).

3. Drive unit according to Claim 1 or 2, **characterized in that** the base cover (20) is formed from sheet steel.

4. Drive unit according to Claim 1 or 2, **characterized in that** the base cover (20) is formed as a pressed part made of a lightweight alloy.

5. Drive unit according to Claim 1, **characterized in that** the base cover (20) is fabricated from a cast material, for example cast steel, cast lightweight metal or nodulized cast iron and is bolted onto the housing (18, 19).

6. Drive unit according to Claim 1, **characterized in that** the base cover (20) is embodied as a forged part and is bolted onto the housing (18, 19).

7. Drive unit according to one of the preceding claims, **characterized in that** the region of the transmission housing (19) which is near to the base is provided with a protective cover (22) which protects the housing (19) against mechanical damage from below.

8. Drive unit according to Claim 7, **characterized in that** the protective cover (22) is fabricated from sheet spring steel and is attached to the housing (19), spaced apart therefrom.

## Revendications

1. Unité d'entraînement (10) pour un véhicule ferroviaire automoteur muni d'un moteur d'entraînement électrique (12) et d'un engrenage (14) entraîné par celui-ci qui est relié à un jeu de roues, **caractérisée en ce que** le carter d'engrenage (18, 19) n'est pas divisé par le support d'engrenage et est muni d'un couvercle de fond (20) qui s'étend sur toute la surface de la section transversale du carter d'engrenage (18) qui est dirigée vers le bas, lequel couvercle de fond (20) protège le carter (19) contre les dommages mécaniques.

2. Unité d'entraînement selon la revendication 1, **caractérisée en ce que** le couvercle de fond (20) est réalisé sous la forme d'une pièce en tôle emboutie et est vissé au carter (18, 19).

3. Unité d'entraînement selon la revendication 1 ou 2, **caractérisée en ce que** le couvercle de fond (20) est réalisé en tôle d'acier.

4. Unité d'entraînement selon la revendication 1 ou 2, **caractérisée en ce que** le couvercle de fond (20) est réalisé sous la forme d'une pièce emboutie dans un alliage de métal léger.

5. Unité d'entraînement selon la revendication 1, **caractérisée en ce que** le couvercle de fond (20) est réalisé dans un matériau fondu, par exemple de la fonte d'acier, de la fonte de métal léger ou de la fonte nodulaire, et est vissé au carter (18, 19).

6. Unité d'entraînement selon la revendication 1, **caractérisée en ce que** le couvercle de fond (20) est réalisé sous la forme d'une pièce forgée et est vissé au carter (18, 19).

7. Unité d'entraînement selon l'une des revendications précédentes, **caractérisée en ce que** la zone du carter d'engrenage (19) qui se trouve à proximité du fond est munie d'un carénage de protection (22) qui protège le carter (19) par le dessous contre les dommages mécaniques.

8. Unité d'entraînement selon la revendication 7, **caractérisée en ce que** le carénage de protection (22) est réalisé en tôle d'acier à ressort et est fixé au carter (19) à une certaine distance de celui-ci.
